# EUROPÄISCHE PATENTANMELDUNG

(11) **EP 1 046 764 A1**
(43) Veröffentlichungstag der Anmeldung: **25.10.2000**
(21) Anmeldenummer: 00107365.9
(22) Anmeldetag: 05.04.2000
(51) Int. Cl.: E04F 13/08, F16B 35/04, F16B 25/00

(54) **Einrichtung zur distanzierten Befestigung von Wärmedämmplatten an Wänden oder Decken**

(30) Priorität: 22.04.1999 AT 71299
(71) Anmelder: Holzinger, Alois, sen., 6800 Feldkirch (AT)
(72) Erfinder: Holzinger, Alois, sen., 6800 Feldkirch (AT)
(74) Vertreter: Hefel, Herbert, Dipl.-Ing.

(57) **Zusammenfassung**

Eine Einrichtung zur distanzierten Befestigung von Wärmedämmplatten an Wänden oder Decken umfaßt einen zentralen, eine Längsbohrung zur Aufnahme einer einen Kopf besitzenden Befestigungsschraube (3) aufweisenden Schaft (1) mit mindestens einem diesen Schaft (1) schraubenflächenartig umlaufenden Band (4), wobei an der einen äußeren Stirnseite des Schaftes (1) eine dem Ansatz und Angriff eines Drehwerkzeuges dienende, mit der Längsbohrung koaxial liegende Aussparung angeformt ist. Die Befestigungsschraube (3) weist in an sich bekannter Weise zwei Schäfte (7, 9) auf wobei zu beiden Seiten des Kopfes (11) je ein Schaft (7, 9) vorgesehen ist und gegebenenfalls beide Schäfte (7, 9) Gewinde tragen.

## Beschreibung

Die Erfindung bezieht sich auf eine Einrichtung zur distanzierten Befestigung von Wärmedämmplatten an Wänden oder Decken mit einem zentralen, eine Längsbohrung zur Aufnahme einer einen Kopf besitzenden Befestigungsschraube aufweisenden Schaft mit mindestens einem diesen Schaft schraubenflächenartig umlaufenden Band und an der einen äußeren Stirnseite des Schaftes eine dem Ansatz und Angriff eines Drehwerkzeuges dienende, mit der Längsbohrung koaxial liegende Aussparung angeformt ist.

Eine solche Einrichtung ist aus der AT 404 271 B bekannt. Die zur Festlegung dieser Einrichtung dienende Befestigungsschraube hat einen Kopf und einen Gewindeschaft. Wird diese Einrichtung bestimmungsgemäß eingesetzt, so ist der Kopf dieser Befestigungsschraube von der stirnseitig liegenden Aussparung des Schaftes zur Gänze aufgenommen. Dabei ist das stirnseitige Ende des zentralen, das umlaufende Band aufweisenden Schaftes der Einrichtung gegenüber der äußeren Begrenzungswand der Dämmplatte zurückversetzt. Die dadurch in der Dämmplatte verbliebene Öffnung kann verschlossen werden.

Es besteht nun häufig der Wunsch, an der in dieser Weise wärmegedämmten Außenwand eine Fassadenverkleidung anzubringen. Zur Lösung dieser Aufgabe wird erfindungsgemäß vorgeschlagen, dadurch gekennzeichnet, daß die Befestigungsschraube zwei Schäfte aufweist, wobei zu beiden Seiten des Kopfes je ein Schaft vorgesehen ist und gegebenenfalls beide Schäfte Gewinde tragen. Dieser zweite Schaft ist so lange bemessen, daß er gegenüber der Außenseite der Wärmedämmplatte auskragt, und an diesem auskragenden Schaft können nun Beschläge festgelegt werden, die zur Befestigung von Fassadenverkleidungs-elementen dienen. Falls der gegenüber der Wärmedämmplatte vorkragende Schaft, der einen runden oder mehreckigen Querschnitt haben kann, eine im wesentlichen glatte Oberfläche besitzt dann werden an ihm Klemmbriden befestigt. Ist dieser auskragende Schaftteil mit einem Gewinde, vorzugsweise mit einem metrischen Gewinde bestückt, so können Muttern aufgedreht werden, die zur Halterung von Beschlägen dienen, an welchen die Fassadenverkleidungselemente dann zu befestigen sind.

Zur Veranschaulichung der Erfindung wird diese anhand der Zeichnung näher beschrieben. Es zeigen:
- Fig. 1: die Einrichtung in Seitensicht;
- Fig. 2: in Ansicht - Blickrichtung Pfeil C;
- Fig. 3: eine Seitensicht der Einrichtung wie Fig. 1, jedoch zum Teil aufgerissen;
- Fig. 4: die Befestigungsschraube;
- Fig. 5: die Befestigungsschraube wie aus Fig. 4, jedoch mit aufgeschraubter Gewindehülse;
- Fig. 6: ein Werkzeug und
- Fig. 7: dessen Ansicht - Blickrichtung Pfeil A in Fig. 6;

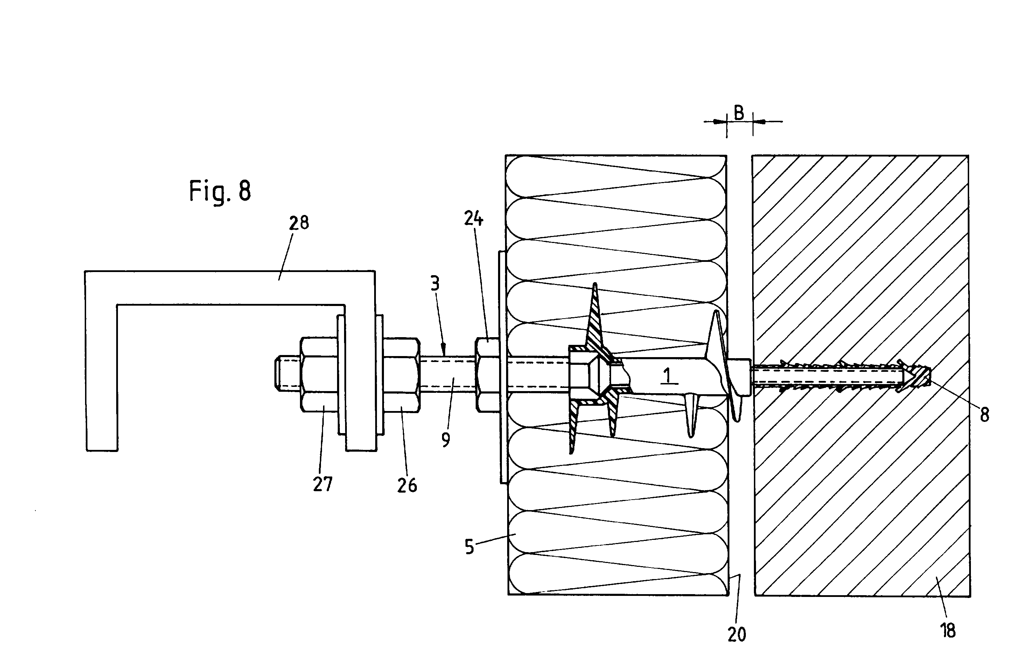

- Fig. 8: die Einrichtung bestimmungsgemäß eingesetzt.

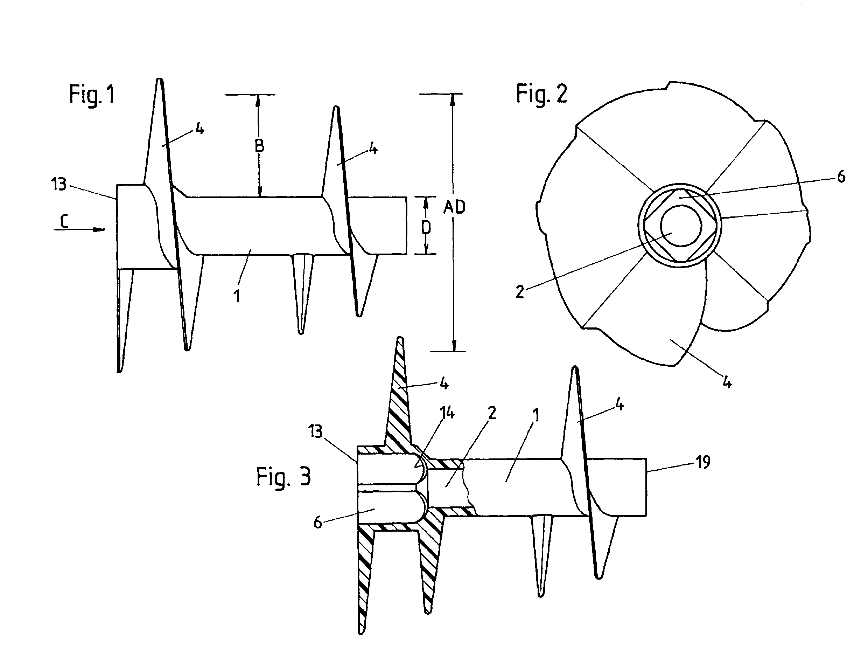

Die in Fig. 1 veranschaulichte Einrichtung, die zweckmäßigerweise einstückig aus einem geeigneten Kunststoff gefertigt ist, besitzt einen zentralen Schaft 1, der von einer Längsbohrung 2 durchsetzt ist zur Aufnahme einer Befestigungsschraube 3, wobei der Außendurchmesser der Befestigungsschraube etwa dem Durchmesser der Längsbohrung 2 entspricht, kleiner als diese ist, so daß die Befestigungsschraube 3 durch die Längsbohrung 2 hindurchsteckbar ist und in dieser Längsbohrung 2 ein geringes Spiel aufweist. An diesem zentralen Schaft 1 ist außenseitig ein schraubenflächenartig umlaufendes, hier zweigeteiltes Band 4 vorgesehen. Die auf die Länge des schraubenflächenartig umlaufenden Bandes 4 bezogene durchschnittliche Breite B desselben ist größer als der Außendurchmesser D des zentralen Schaftes 1. Das Verhältnis des mittleren Außendurchmessers AD des schraubenflächenartig umlaufenden Bandes 4 zum Außendurchmesser D des zentralen Schaftes 1 beträgt bei dem hier veranschaulichten Ausführungsbeispiel etwa 3,5 : 1. Die Steigung des schraubenflächenartig umlaufenden Bandes beträgt etwa 15 mm. Zumindest der Teil des schraubenflächenartig umlaufenden Bandes 4, der bei der Montage mit der Wärmedämmplatte 5 vorlaufend in Wirkverbindung tritt, weist eine mit zunehmender Steigung zunehmende Breite auf und zeigt somit einen spiralförmigen Verlauf der Begrenzungskante. An der einen äußeren Stirnseite 13 des Schaftes 1 ist eine dem Ansatz und dem Angriff eines Drehwerkzeuges dienende, hier mehreckige Aussparung 6 vorgesehen. Die Einlaufkante des schraubenflächenartig umlaufenden Bandes 4 und auch zweckmäßigerweise seine Randkante ist über seine Länge schneidenartig ausgestaltet.

Die hier gezeigte Einrichtung kann auch aus einem metallischen Werkstoff gefertigt sein. Die vorstehend angegebenen Abmessungen und Abmessungsverhältnisse beziehen sich auf das in der Zeichnung gezeigte Ausführungsbeispiel. Diese Abmessungen und Abmessungsverhältnisse sind den Materialien anzupassen, aus welchen die Wärmedämmplatte 5 gefertigt ist. Diese Abmessungen können daher sowohl nach oben wie auch nach unten variieren.

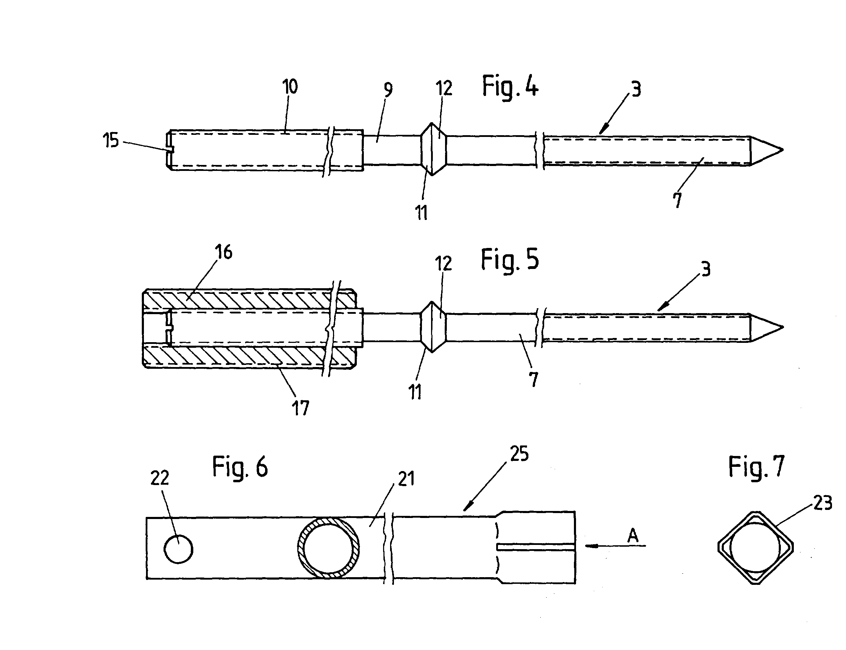

Die Befestigungsschraube 3 (Fig. 4) besitzt einen ersten Gewindeschaft 7. Dieser Gewindeschaft ist zur Aufnahme eines handelsüblichen Kunststoffdübels ausgestaltet. Der zweite Schaft 9 trägt hier ein metrisches Gewinde 10. Zwischen den beiden Schäften 7 und 9 ist durch eine Verbreiterung ein Kopf 11 angeformt, dessen dem ersten Gewindeschaft 7 zugewandte Seite 12 im wesentlichen korrespondierend zum Grund 14 der Aussparung 6 ausgebildet ist. Der Durchmesser des Kopfes 11 ist größer als der Durchmesser der Bohrung 2 im Schaft 1 der Einrichtung. Stirnseitig ist am zweiten Schaft 9 eine Quernut ausgeformt, hier kann ein Drehwerkzeug angesetzt werden. Anstelle einer solchen Quernut 15 könnte hier auch ein Mehrkant angeformt sein. Anstelle des metrischen Gewindes 10 am zweiten Schaft 9 könnte dieser Schaft auch mit glatter Oberfläche und kreisförmigem Querschnitt ausgebildet sein, oder aber er könnte einen mehreckigen Querschnitt aufweisen. Diese Befestigungsschraube 3 könnte auch so beschrieben werden, daß von ihr ausgesagt wird, daß sich in ihrem Mittelteil eine Verbreiterung befindet, deren Durchmesser größer ist als der Durchmesser der Längsbohrung 2 des Schaftes 1.

Fig. 5 zeigt dieselbe Befestigungsschraube wie Fig. 4, jedoch ist hier auf das Gewinde 10 des zweiten Schaftes 9 eine Gewindehülse 16 aufgeschraubt, die auch an ihrer Außenseite ein Gewinde 17 trägt. Die Länge dieser Gewindehülse 16 entspricht etwa der Länge des zweiten Schaftes 9.

An einer Gebäudewand 18 ist außenseitig eine Wärmedämmung anzubringen. In die hier anzubringende Wärmedämmplatte 5 wird die Einrichtung nach den Fig. 1 bis 3 eingeschraubt, und zwar so weit, daß deren eine Stirnende 19 gegenüber der Begrenzungsfläche 20 der Dämmplatte 5 etwas vorsteht, dann wird die Dämmplatte 5 ausgerichtet, und zwar hinsichtlich ihrer Horizontallage. Mittels einem geeigneten Werkzeug mit einem Bohrer, der nun in die Längsbohrung 2 der Einrichtung eingeführt wird, wird in die Gebäudewand 18 eine Bohrung zur Aufnahme eines Dübels 8 gebohrt. Anschließend wird auf den ersten Schaft 7 der Befestigungsschraube 3 ein Kunststoffdübel aufgesteckt und dieser zusammen mit der Befestigungsschraube 3 in und durch die Längsbohrung 2 der Einrichtung hindurchgesteckt und dabei der Dübel 8 in die für seine Aufnahme vorbereitete Bohrung in der Gebäudewand 18 eingesteckt. An der Quernut 15 der Befestigungsschraube 3 wird nun ein Drehwerkzeug eingesetzt und die Befestigungsschraube so weit in den Dübel 8 eingedreht, bis ihr Kopf 11 am Grund 14 der Aussparung 6 aufläuft. Um nun die Dämmplatte 5 hinsichtlich ihres Abstandes B gegenüber der Gebäudewand 18 auszurichten, wird nun ein Werkzeug 25 verwendet, das in den Fig. 6 und 7 gezeigt ist und das nach Art eines Zündkerzenschlüssels ausgebildet ist. Dieses Werkzeug 25 besteht aus einem Rohrstück 21 mit einer endseitigen Querbohrung 22 zum Durchstecken eines Stabes. Das andere Ende des Rohrstückes 21 ist zu einem Mehreck 23 aufgeweitet, dessen Außenkontur der Querschnittskontur der Aussparung 6 entspricht und das so bemessen ist, daß es in diese Aussparung 6 eingesteckt werden kann.

Dieses Werkzeug 25 wird nun auf den auskragenden Schaft 9 der Befestigungsschraube aufgesteckt, so daß das Mehreck 23 in die Aussparung 6 ragt. Durch Drehen des Werkzeuges 25, das über sein Mehreck 23 mit der Einrichtung formschlüssig verbunden ist, kann nun die Einrichtung verdreht werden, die hinsichtlich ihrer Lage gegenüber der Gebäudewand 18 festgelegt ist, wodurch die Dämmplatte 5 gegenüber der Gebäudewand 18 verstellt wird und sich dadurch je nach Drehrichtung der Abstand B vergrößert oder verkleinert. Anschließend wird das Werkzeug 25 wieder abgezogen.

Ist die Dämmplatte 5 in dieser Weise ausgerichtet, so wird auf das Gewinde 10 des zweiten, gegenüber der Dämmplatte 5 auskragenden Schaftes 9 eine Bundmutter 24 mit einem weit auskragenden Bund aufgeschraubt. Anstelle einer solchen Bundmutter kann eine herkömmliche Mutter mit einer entsprechend großen Beilagscheibe vorgesehen werden. Auf diesen auskragenden Teil des Schaftes 9 werden nun noch zwei weitere Bundmuttern 26 und 27 aufgeschraubt, zwischen welchen der eine Schenkel eines hier U-förmigen Profilstückes 28 verspannt wird. Dieses Profilstück 28 dient nun als Beschlag, an dem Fassadenteile festgelegt werden können. Ist der auskragende Schaft 9 glatt, also ohne Gewinde 10 ausgebildet, so können Beschläge zur Befestigung von Fassadenteilen beispielsweise durch Klemmbriden fixiert werden.

Um mit einer Größe der Befestigungsschraube 3 das Auslangen zu finden, ist für den Schaft 9 eine Gewindehülse 16 mit einem Außengewinde 17 vorgesehen (Fig. 5). Falls sich also der auskragende Schaft 9 wegen der Stärke der Dämmplatte 5 als zu kurz erweisen sollte, kann die Gewindehülse 16 so weit ausgedreht werden, daß sie gegenüber dem stirnseitigen Ende dieses Schaftes 9 auskragt. An dieser Gewindehülse 16 werden dann die Bundschrauben aufgedreht, die zur Halterung jenes Beschlages dienen, an dem der Fassadenteil zu befestigen ist.

Dank der erfindungsgemäßen Ausgestaltung der Befestigungsschraube 3 kann diese vorliegendenfalls zwei Funktionen erfüllen. Einerseits dient sie zur Festlegung der Einrichtung an der Außenseite der zu dämmenden Gebäudewand, andererseits ist sie dazu geeignet, Beschlagteile aufzunehmen, an welchen Fassadenverkleidungselemente festgelegt werden können. Diese Beschläge können sehr unterschiedlich gestaltet sein. Sie müssen nur eine Aussparung besitzen, durch welche der auskragende Teil des Schaftes 9 durchsteckbar ist. Dank der Bundmutter 24 mit dem weit ausladenden Bund wird der auskragende Abschnitt des Schaftes 9 ausreichend gegenüber der Dämmplatte 5 abgestützt, so daß dieser auskragende Abschnitt des Schaftes 9 relativ hoch belastbar ist.

### Legende zu den Hinweisziffern:

- 1: Schaft
- 2: Längsbohrung
- 3: Befestigungsschraube
- 4: Band
- 5: Wärmedämmplatte
- 6: Aussparung
- 7: Gewindeschaft
- 8: Kunststoffdübel
- 9: Schaft
- 10: Gewinde
- 11: Kopf
- 12: Seite
- 13: Stirnseite
- 14: Grund
- 15: Quernut
- 16: Gewindehülse
- 17: Gewinde
- 18: Gebäudewand
- 19: Stirnende
- 20: Begrenzungsfläche
- 21: Rohrstück
- 22: Querbohrung
- 23: Mehreck
- 24: Bundmutter
- 25: Werkzeug
- 26: Bundmutter
- 27: Bundmutter
- 28: Profilstück

## Patentansprüche

1. Einrichtung zur distanzierten Befestigung von Wärmedämmplatten an Wänden oder Decken mit einem zentralen, eine Längsbohrung zur Aufnahme einer einen Kopf (11) besitzenden Befestigungsschraube (3) aufweisenden Schaft (1) mit mindestens einem diesen Schaft (1) schraubenflächenartig umlaufenden Band (4) und an der einen äußeren Stirnseite (13) des Schaftes (1) eine dem Ansatz und Angriff eines Drehwerkzeuges dienende, mit der Längsbohrung (2) koaxial liegende Aussparung (6) angeformt ist, dadurch gekennzeichnet, daß die Befestigungsschraube (3) zwei Schäfte (7, 9) aufweist, wobei zu beiden Seiten des Kopfes (11) je ein Schaft (7, 9) vorgesehen ist und gegebenenfalls beide Schäfte (7, 9) Gewinde tragen.

2. Einrichtung nach Anspruch 1, dadurch gekennzeichnet, daß die zu beiden Seiten des Kopfes (11) liegenden Schäfte (7, 9) gleichachsig zueinander liegen.

3. Einrichtung nach Anspruch 1 oder 2, dadurch gekennzeichnet, daß zumindest einer der beiden Schäfte (9) ein metrisches Gewinde (10) aufweist.

4. Einrichtung nach Anspruch 3, dadurch gekennzeichnet, daß sich zumindest das metrische Gewinde (10) im wesentlichen über die gesamte Länge dieses Schaftes (9) erstreckt.

5. Einrichtung nach Anspruch 4, dadurch gekennzeichnet, daß die Stirnseite des das metrische Gewinde (10) tragenden Schaftes (9) zum Ansatz und Angriff eines Drehwerkzeuges eine Nut (15) aufweist oder einen diesem Zweck dienenden Mehrkantansatz besitzt.

6. Einrichtung nach Anspruch 3 oder 4, dadurch gekennzeichnet, daß auf den Schaft (9) mit dem metrischen Gewinde (10) eine Gewindehülse (16) aufgeschraubt ist, deren Länge etwa der Länge des sie tragenden Schaftes (9) entspricht und an der Außenseite dieser Gewindehülse (16) ein weiteres Gewinde (17) vorgesehen ist.

7. Einrichtung nach Anspruch 1, dadurch gekennzeichnet, daß der Kopf (11) der Befestigungsschraube (3) aus einer den Querschnitt der Schäfte (7, 9) radial überragenden Verbreiterung besteht.

8. Einrichtung nach Anspruch 1, dadurch gekennzeichnet, daß zumindest die Seite (12) des Kopfes (11), die dem das metrische Gewinde (10) tragenden Schaft (9) abgewandt ist, korrespondierend zum Grunde (14) der stirnseitigen Aussparung (6) ausgebildet ist.

9. Einrichtung nach Anspruch 1, dadurch gekennzeichnet, daß der eine Schaft (9) eine glatte Oberfläche besitzt und gegebenenfalls einen mehreckigen Querschnitt aufweist.
